# EUROPÄISCHE PATENTANMELDUNG

(11) **EP 0 726 327 A1**
(43) Veröffentlichungstag der Anmeldung: **14.08.1996**
(21) Anmeldenummer: 95118992.7
(22) Anmeldetag: 01.12.1995
(51) Int. Cl.: C21C 1/10, C22C 37/00, F16D 69/02

(54) **Bremsklotzsohle und Verfahren zu deren Herstellung**

(30) Priorität: 05.12.1994 CH 3683/94
(71) Anmelder: Maschinenfabrik & Eisengiesserei Ed. Mezger AG., CH-3283 Kallnach (CH)
(72) Erfinder: Tümmers, Wilhelm, CH-4535 Hubersdorf (CH)
(74) Vertreter: AMMANN INGENIEURS-CONSEILS EN PROPRIETE INTELLECTUELLE SA BERNE

(57) **Zusammenfassung**

Die Bremsklotzsohle besteht aus Gusseisen mit hohem Phosphorgehalt von 2,5 - 3 % und einem Restmagnesium-Gehalt von 0,02 - 0,04 %. Damit wird die hohe Sprödigkeit verringert, bzw. die Zugfestigkeit und Dehnung des phosphorhaltigen Gusseisens erheblich verbessert, ohne die günstige Bremswirkung und hohe Verschleissfestigkeit des phosphorhaltigen Gusseisens massgebend zu beeinträchtigen. Bei der Herstellung von Bremsklotzsohlen wird Magnesium der Gusseisenschmelze in Form einer hochprozentigen Fe-Mg-Si-Legierung ab ca. 30 % Magnesium zugeführt.

## Beschreibung

Die vorliegende Erfindung betrifft eine Bremsklotzsohle für Bahnwagen und -Lokomotiven aus Gusseisen mit hohem Phosphorgehalt von beispielsweise 2,5 - 3 %. Solche Bremsklotzsohlen bzw. Gusseisen zu deren Herstellung sind an sich bekannt, beispielsweise aus der EP-A-0 026 578 bzw. der EP-B-0 277 931. Die wesentlichen Vorteile solcher bekannter Bremsklotzsohlen bestehen insbesondere in der hohen Bremswirkung, speziell bei niedrigen Geschwindigkeiten, und der hohen Verschleissfestigkeit. Diesen Vorteilen steht der grosse Nachteil gegenüber, dass das Gusseisen durch den hohen Phosphorgehalt erheblich versprödet wird, d. h. eine geringe Zugfestigkeit von 15 bis 20 N/mm² und praktisch keine Bruchdehnung, im folgenden Dehnung genannt, aufweist. Diese Sprödigkeit bzw. geringe Festigkeit des Gusseisens bedingte in der Praxis die Verbindung und Armierung des Gusseisenteils mit Stahlteilen. Damit wird die Herstellung umständlich und entsprechend teuer.

Ziel vorliegender Erfindung ist es, die genannten Vorteile von Bremsklotzsohlen aus Gusseisen mit hohem Phosphorgehalt zu nutzen und zugleich die erwähnten Nachteile zu vermeiden, bzw. entscheidend zu verringern. Dieses Ziel wird dadurch erreicht, dass die Versprödung des Gusseisens infolge des erhöhten Phosphorgehaltes durch einen Zusatz an Magnesium herabgesetzt ist. Damit kann die Zugfestigkeit und die Dehnung des Gusseisens erheblich verbessert werden, so dass auch die Verfestigung mittels Stahlteilen entsprechend unnötig ist, bzw. vereinfacht werden kann.

Es ist bekannt, dass durch eine Magnesiumbehandlung das Gusseisen einer bestimmten Zusammensetzung dehnfähig wird. Im Basiseisen darf jedoch nicht mehr als max. 0,1 % Phosphor enthalten sein, denn beispielsweise bereits eine Erhöhung des Phosphors von 0,03 % auf 0,06 % verringert die Dehnung um ca. die Hälfte.

Die Möglichkeit, die Zugfestigkeit und Dehnung eines Gusseisens mit einem hohen Phosphorgehalt von 2,5 - 3 % überhaupt verbessern zu können, lag insofern nicht auf der Hand. Ueberdies erschwert der hohe Phosphorgehalt das Einbringen von Magnesium entscheidend, und es wurde daher nicht für möglich gehalten, Magnesium überhaupt nutzbringend in die Schmelze einzubringen. Die Erfindung betrifft daher auch ein Verfahren zur Herstellung einer Bremsklotzsohle gemäss Anspruch 6. Es hat sich gezeigt, dass auf diese Weise Magnesium mit einem Restgehalt von 0,02 - 0,04 % im Endprodukt zugesetzt werden kann, und dass damit ein neues und bisher unbekanntes Material entsteht, welches eine erhebliche Verbesserung der Zugfestigkeit und der Dehnung aufweist. Zwei gegossene Versuchsstäbe mit einem Gehalt von 0,022 % Magnesium ergaben Zugfestigkeiten von 237 N/mm² bzw. 225 N/mm² und eine Dehnung von ungefähr 1,5 % bzw. 1,3 %. Es sind dabei verschiedene Anteile an Phosphor und Magnesium, etwa im Rahmen von 2,5 - 3 % Phosphor und 0,02 bis 0,04 % Magnesium möglich, was zu etwas unterschiedlichen Festigkeiten und Dehnungen bzw. Reibungskoeffizienten und Verschleissfestigkeiten führt. Wie erwähnt, wird dabei kein Sphäroguss entstehen, sondern es entsteht eine Graphitausbildung in Richtung von Vermikulargraphitguss. Es wird also trotz des sehr hohen, als Störelement wirkenden Phosphorgehaltes eine Graphitausbildung erzielt, die eine wesentliche Verbesserung der Zugfestigkeit und Dehnung mit sich bringt unter Beibehaltung der guten Wärmeleitfähigkeit des normalen Bremsklotzgusseisens. Die Werte können dabei zwischen 1,0 - 2,0 % für die Dehnung liegen. Das entstehende Gusseisen kann als perlitisches Gusseisen mit einem ausgeprägten Netz aus Phosphideutektikum beschrieben werden. Alle Prozentangaben beziehen sich auf Gewichtsprozente.

## Patentansprüche

1. Bremsklotzsohle aus Gusseisen mit hohem Phosphorgehalt, dadurch gekennzeichnet, dass die Versprödung des Gusseisens infolge des erhöhten Phosphorgehaltes durch einen Zusatz an Magnesium herabgesetzt ist.

2. Bremsklotzsohle nach Anspruch 1, dadurch gekennzeichnet, dass bei einem Phosphorgehalt von 2,5 bis 3 % ein Magnesiumanteil von 0,02 bis 0,04 % vorhanden ist.

3. Bremsklotzsohle nach Anspruch 1 oder 2, dadurch gekennzeichnet, dass eine Graphitausbildung in Richtung von Vermikulargraphitguss vorliegt.

4. Bremsklotzsohle nach einem der Ansprüche 1 bis 3, dadurch gekennzeichnet, dass das Gusseisen eine Zugfestigkeit von 220 bis 240 N/mm² und eine Dehnung von 1,0 bis 2,0 % aufweist.

5. Bremsklotzsohle nach einem der Ansprüche 1 bis 4, gekennzeichnet durch ein perlitisches Gusseisen mit einem ausgeprägten Netz aus Phosphid-Eutektikum.

6. Verfahren zur Herstellung einer Bremsklotzsohle nach Anspruch 1 durch Giessen, dadurch gekennzeichnet, dass das Magnesium der Gusseisenschmelze in Form einer hochprozentigen Fe-Mg-Si-Legierung ab ca. 30 % Mg zugeführt wird.
